# EUROPÄISCHE PATENTSCHRIFT

(11) **EP 2 002 405 B1**
(45) Veröffentlichungstag und Bekanntmachung des Hinweises auf die Patenterteilung: **17.06.2009**
(21) Anmeldenummer: 07727510.5
(22) Anmeldetag: 29.03.2007
(51) Int. Cl.: G07F 7/06

(54) **TRANSPORTEINHEIT IN EINEM RÜCKNAHMESYSTEM FÜR LEERGUT**
TRANSPORTING UNIT IN A RETURN SYSTEM FOR EMPTY GOODS
UNITE DE TRANSPORT DANS UN SYSTEME DE RECUPERATION DE PRODUITS VIDES

(30) Priorität: 06.04.2006 DE 102006016596
(43) Veröffentlichungstag der Anmeldung: 17.12.2008
(73) Patentinhaber: Wincor Nixdorf International GmbH, 33106 Paderborn (DE)
(72) Erfinder: KURYLAK, Bohdan, 33106 Paderborn (DE)
(86) Internationale Anmeldenummer: PCT/EP2007/053038
(87) Internationale Veröffentlichungsnummer: WO 2007/115946

(56) Entgegenhaltungen:
- EP-A1- 1 441 312
- DE-C1- 10 144 518
- FR-A1- 2 813 027

## Beschreibung

### Technisches Gebiet

Die vorliegende Erfindung betrifft eine Transporteinheit in einem Rücknahmesystem für Leergut wie Flaschen oder Dosen nach dem Oberbegriff des Anspruchs 1.

### Stand der Technik

In der DE 101 44 518 ist eine gattungsgemäße Transporteinheit in einem Rücknahmesystem offenbart. Mit diesem Rücknahmesystem können einzelne Flaschen oder Dosen als Leergut angenommen und mittels einer Transporteinheit auf einem Transportband abgesetzt werden. Damit das Leergut beim Absetzen auf das Transportband nicht umfällt, sind im Bereich der Aufstellfläche Stabilisationsmittel vorgesehen, die einen Aufnahmeraum für das auf das Transportband fallende Leergut bilden, in den das Leergut zwängungsfrei einfallen kann. Danach nehmen die Stabilisierungsmittel eine zweite Position ein, in der der Aufnahmeraum zur Stabilisierung der Stehposition des Leergutes verengt wird. Nachdem das Leergut stabil auf dem Transportband, welches als Förderband ausgebildet ist, steht, werden die beiden Stabilisierungsmittel nach außen gefahren und geben das Leergut frei, so dass dieses mittels des Förderbandes aus dem Bereich der Aufstellfläche heraus zu einem Flaschentisch oder dergleichen transportiert werden kann.

Die EP 1 441 312 offenbart ebenfalls ein Leergutrücknahmesystem, bei dem Leergut über eine Rutsche auf einen Aufstellbereich transportiert wird. Dort ist ein Stabilisator und Auswerfer für den Weitertransport auf das Förderband angeordnet. Der Stabilisator weist Flügel auf, welche an einer vertikalen Spindel angebracht sind und bei einer Drehbewegung das Leergut umgreifen und gegen eine Wand drücken, so dass das Leergut stehend zur Ruhe gelangt. Durch eine weitere Drehung der Spindel in umgekehrter Richtung wird das Leergut auf das Förderband geschoben.

In beiden vorbeschriebenen Leergutrücknahmesystemen wird das Leergut in liegender Position mit dem Boden zuerst in die Eingabevonichtung des Leergutrücknahmesystems eingegeben, dort an einer optischen Erkennungseinheit vorbeitransportiert, um dann über eine Transporteinheit wie einer Rutsche dem Förderer bzw. dem Förderband zugeführt zu werden. Beiden Lösungen ist dabei gemeinsam, dass die Flaschen oder Dosen zunächst in den Aufstellbereich gelangen müssen, dessen Durchmesser durch den Stabilisator auf einen Durchmesser begrenzt wird, der geringfügig größer als der des Leerguts ist. Zu diesem Zweck werden die Daten, die in der Erkennungseinheit gewonnen wurden, für die Ansteuerung der Position des Stabilisators bzw. der Stabilisatoren verwendet. Nachdem der Durchmesser der Aufstellkammer soweit reduziert wurde, dass ungewollte Bewegungen des Leerguts gestoppt wurden, wird die Kammer durch das Öffnen der Stabilisatoren geöffnet und das Leergut wird aus der Kammer bzw. dem Aufstellbereich mittels des Auswerfers auf das Förderband geschoben und dort weitertransportiert.

Die maximal erreichbare Ausfahrgeschwindigkeit bei der Lösung gemäß der DE 101 44 518 ist durch die Tatsache begrenzt, dass das Leergut ohne eine weitere Haltevorrichtung umstürzen kann, sobald das Leergut auf dem Förderband weitertransportiert wird. Die Stabilisierung des Leergutes durch die Stabilisierungsmittel erfordert jedoch ein gewisse Zeit, die limitierend für den Durchsatz des gesamten Leergutsystems wirkt, so dass die maximal erreichbare Durchsatzrate des Leergutrücknahmesystems begrenzt ist.

Bei der in der EP 1 441 312 beschriebenen Lösung wird das Leergut durch die fingerartigen Flügel des Stabilisators bzw. Auswerfers auf ein Transportband geschoben, welches sich an den Aufstellbereich anschließt. Da das Leergut durch die fingerartigen Flügel auf das Förderband geschoben wird, kann die Geschwindigkeit des Flügelrades nicht beliebig erhöht werden, da sonst das Leergut umstürzen würde. Hierdurch wird gleichfalls die maximale Annahmerate des Leergutrücknahmesystems begrenzt.

### Darstellung der Erfindung

Aufgabe der vorliegenden Erfindung ist es, ein Leergutrücknahmesystem bereit zu stellen, das eine erhöhte Anzahl von Leergutbehältnissen pro Zeiteinheit annehmen kann.

Diese Aufgabe wird erfindungsgemäß mit einem Leergutrücknahmesystem mit den Merkmalen des Anspruchs 1 gelöst. Weitere vorteilhafte Ausgestaltungen des Leergutrücknahmesystems ergeben sich durch die Merkmale der Unteransprüche.

Das erfindungsgemäße Leergutrücknahmesystem zeichnet sich durch eine Transporteinheit mit zumindest zwei Aufstellbereichen auf, die jeweils mit Stabilisatoren versehen sind. Die Transporteinheit, die eingeworfenes Leergut den Aufstellbereichen zuführt, ist mit einer Weiche versehen, die das Leergut wahlweise auf die benachbarten Aufstellbereiche des Förderers transportiert. Von der Eingabeeinrichtung des Leergutrücknahmesystems, die eine Erkennungseinheit aufweist, gelangt das Leergut auf die Transporteinheit, die vorzugsweise als Rutsche ausgebildet ist. Die Weiche leitet das ankommende Leergut auf eine der beiden Aufstellbereiche um. Im einfachsten Fall wird das Leergut durch sein Eigengewicht durch die Transporteinheit gelangen, wodurch vorteilhafterweise kein zusätzlicher Antrieb zum Transport des Leergutes erforderlich ist.

In einer besonders einfachen und bevorzugten Ausführungsform des erfindungsgemäßen Leergutrücknahmesystems weist die Transporteinheit eine sich nach unten in Richtung Förderer verbreiternde Rutsche auf, in der eine verschwenkbare Weiche angeordnet ist. Diese Transporteinheit hat einen Eingangsbereich und zwei Ausgangsbereiche, wobei je nach Stellung der Weiche der Eingangsbereich mit jeweils einem der beiden Ausgangsbereiche verbindbar ist, so dass das einfallende Leergut alternierend zu einem der beiden Aufstellflächen gefördert wird.

Es ist selbstverständlich im Sinne der Erfindung, dass mehrere Transporteinheiten auch hintereinander und/oder parallel zur Transportrichtung des Leergutes angeordnet sein können, so dass mehr als zwei Ausgangsbereiche möglich sind.

Die Weiche ist vorteilhafterweise an der Oberseite einer Trennwand, die die beiden Aufstellbereiche voneinander trennt, verschwenkbar angelenkt, so dass keine störenden Vorsprünge entstehen, an welchen eventuell das herabfallende Leergut hängen bleiben könnte. Das freie Ende der Weiche liegt vorteilhaft bündig an den die Rutsche begrenzenden Wänden an oder greift in fensterartige Öffnungen oder Aussparungen der Wände ein, so dass auch hier das Leergut ohne die Gefahr des Hängensbleibens vorbeigleiten kann. Damit das von der Transporteinheit geförderte Leergut beim Aufsetzen auf den Förderer nicht umfallen kann, sind Stabilisatoren vorgesehen, welche um die Aufstellbereiche herum Kammern bilden. Der Durchmesser der Kammer ist an das in die Kammer gelangende Leergut derart angepasst, dass dieses gerade noch zwängungsfrei in die Kammer gelangen kann. Die Stabilisatoren können verschwenkbar und/oder als verschiebbare Wände oder Greifer ausgebildet sein. Sie stellen sicher, dass das auf den Aufstellbereich fallende Leergut schnell zur Ruhe gelangt, um dann vom Transportband des Förderers weitertransportiert zu werden. Da erfindungsgemäß zwei Aufstellkammern vorgesehen sind, kann bereits während der Freigabe des Leergutes aus einer Kammer ein zweites Leergut mittels der Transporteinheit zu der anderen Aufstellkammer geleitet werden, wodurch vorteilhafterweise der Gesamtdurchsatz erhöht wird.

### Kurze Beschreibung der Zeichnungen

Nachfolgend wird eine mögliche Ausführungsform des erfindungsgemäßen Leergutrücknahmesystems anhand einer Zeichnung näher erläutert.
In der Zeichnung zeigt:

Fig. 1: eine perspektivische Ansicht einer erfindungsgemäßen Transporteinheit;

Fig. 2 Transporteinheit mit transportiertem Leergut;

Fig. 3: Transporteinheit aus den Fig. 1 und 2 mit auf gestelltem Leergut und einem zweiten Leergut auf der Transporteinheit;

Fig. 4: Weitertransport des ersten zugeführten Leergutes auf dem Förderer;

Fig. 5: Weitertransport des zweiten zugeführten Leergutes auf dem Förderer.

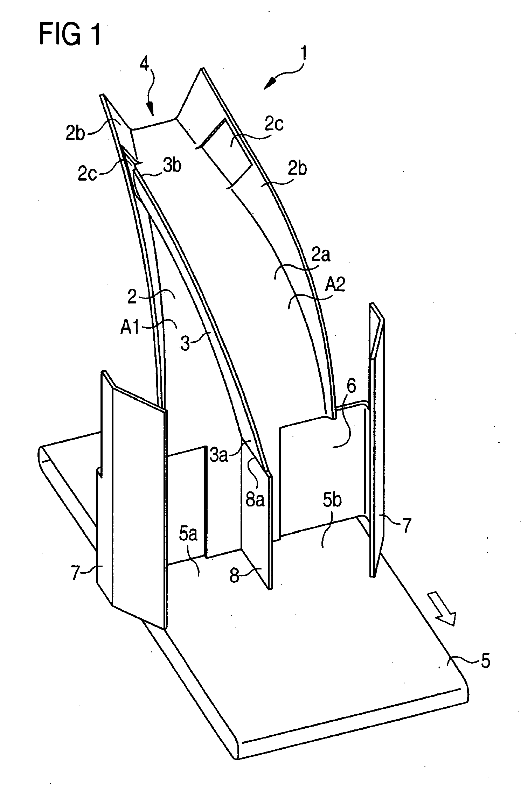

Die Figur 1 zeigt ein Leergutrücknahmesystem mit einer Transporteinheit 1. Die Transporteinheit 1 weist einen als Rutsche 2 ausgebildeten Fallschacht mit zwei begrenzenden Rinnenwandungen 2b auf, der das Leergut aus einem höheren Förderniveau auf ein niedrigeres, durch einen Förderer 5 gebildetes Förderniveau überführt. Die Rutsche 2 hat einen Eingangsbereich 4, der mit einer hier nicht dargestellten Eingabevorrichtung für Flaschen oder Dosen in Verbindung steht. Die Transporteinheit 1 weist ferner eine Weiche 3 auf, die mit ihrem unteren Ende 3a verschwenkbar an einer Trennwand 8 angelenkt ist. Ein nicht dargestellter Antrieb kann die Weiche 3 derart verschwenken, dass wahlweise das freie Weichenende 3b an einer der beiden Rinnenwandungen 2b zur Anlage gelangen kann. In den Rinnenwandungen 2b sind fensterartige Öffnungen 2c angeordnet, in die das freie Ende 3b der Weiche 3 eingreift, so dass das Leergut - ohne der Gefahr des Hängenbleibens ausgesetzt zu sein - über den Rinnenboden 2a und geführt von einer Rinnenwandung 2b und der Weiche 3 auf eine der Aufstellflächen 5a oder 5b auf dem Förderer 5 gelangen kann. Der Förderer 5 ist vorzugsweise als Förderband aus gebildet.

In der Figur 1 ist die Weiche 3 nach links verschwenkt und mit einem Aufstellbereich 5b verbunden. Bei einem Verschwenken der Weiche 3 wird das Leergut entlang der Bahnkurve A 1 transportiert und fällt dann in den Auf stellbereich _ 5a.

Im Bereich der Aufstellbereiche 5a und 5b sind Stabilisatoren 7 vorgesehen, die quer zur Bewegungsrichtung (Pfeil) des Förderers 5 bewegt werden können. Die entsprechenden Antriebe sind in Figur 1 nicht dargestellt. Je nachdem wie weit die Stabilisatoren 7 in Richtung Trennwand 8 gefahren werden, bilden sie zusammen mit der Trennwand 8 und der Rückwand 6 eine Kammer, deren Durchmesser dem des ankommenden Leergutes angepasst ist. Hierdurch kann das Leergut zwängungsfrei in die gebildete Kammer gelangen. Sobald das Leergut auf dem jeweiligen Aufstellbereich 5a, 5b auf setzt und nicht mehr in Bewegung ist, kann der jeweilige Stabilisator 7 nach außen verfahren werden, so dass das Leergut aus der Kammer bzw. aus dem Bereich der Aufstellfläche 5a, 5b herausgelangt.

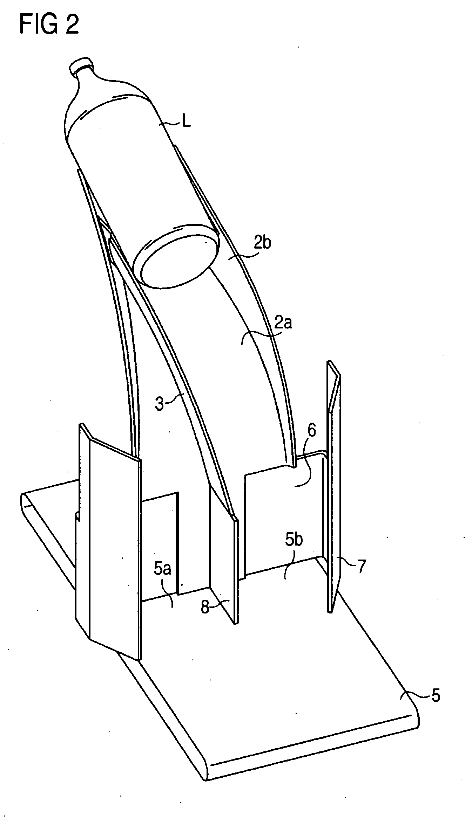

Die Figur 2 zeigt eine Flasche L, welche sich im Bereich der Eingangsbahn der Transporteinheit befindet und aufgrund der Weichenstellung in Richtung Aufstellbereich 5b transportiert wird.

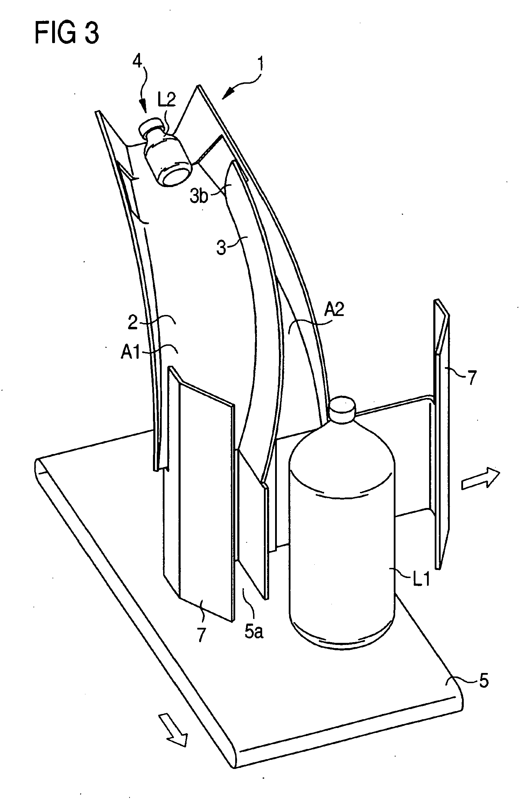

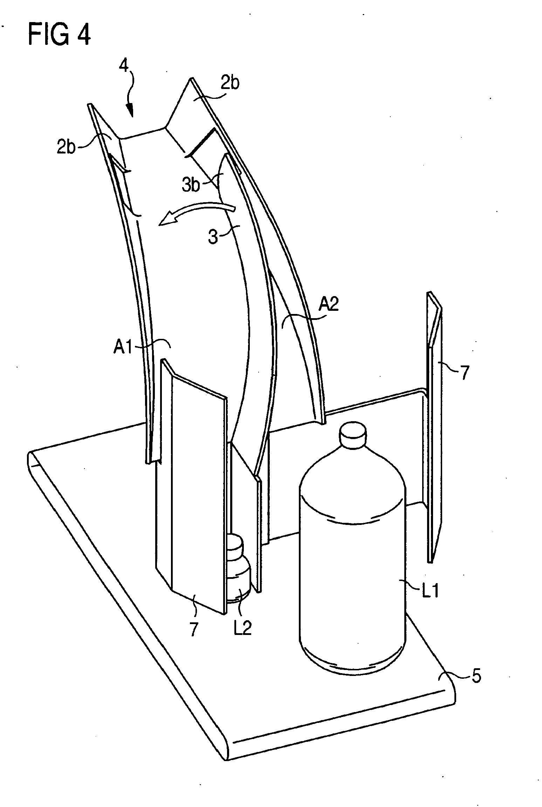

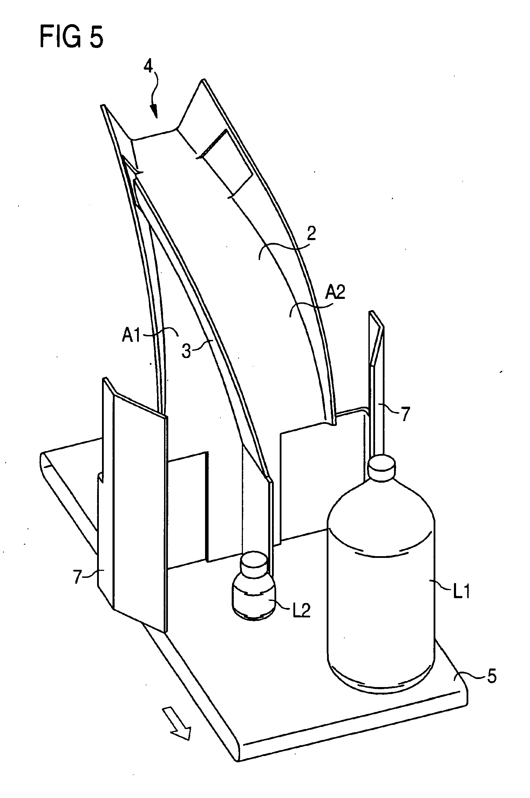

Die Figuren 3 bis 5 zeigen Momentaufnahmen, bei denen die Flasche L1 bereits mittels des Förderers 5 aus dem Bereich des Aufstellbereiches heraustransportiert wird. Während des Herausfahrens der Flasche L1 wird eine Dose L2 über die Rutsche 2 und die verschwenkte Weiche 3 zur linken Kammer und dem Aufstellbereich 5a geleitet. Der linke Stabilisator 7 ist dabei relativ weit nach innen verfahren, so dass die Kammer einen kleinen Durchmesser aufweist und die kleine Dose L2 beim Auftreffen auf die Aufsetzfläche 5a nicht umfallen kann. Sobald die Dose L2 auf dem Förderer 5 aufgesetzt hat, sollte der Förderer 5 wieder zur Ruhe gelangt sein, damit die Dose L2 ebenfalls zur Ruhe gelangen kann. Anschließend wird der Stabilisator 7 nach außen gefahren und der Förderer 5 fährt an, um auch die Dose L2 aus dessen Aufstellbereich 5a herauszutransportieren.

Es ist selbstverständlich möglich, die Stabilisatoren 7 nicht linear zu bewegen, sondern mittels einer Drehbewegung der Stabilisatoren Kammern um die Aufstellbereiche herum zu bilden. Die Stabilisatoren 7 können zur Zwischenwand 8 abgewinkelte Wandungen sein, wie dies in den Figuren 1-5 dargestellt ist. Diese Winkelform der Stabilisatoren 7 dient zum sicheren Greifen der meist rotationssymmetrischen Flaschen oder Dosen. Der Antrieb der Stabilisatoren 7 kann so ausgeführt sein, dass sich die Stabilisatoren 7 gegenläufig auf die Zwischenwandung 8 zu bzw. von ihr wegbewegen, d.h. sie sind starr miteinander verbunden und werden von lediglich einem Antrieb verstellt. Es ist jedoch ebenso möglich, dass jeder Stabilisator 7 mittels eines eigenständigen und unabhängigen Antriebs verstellt wird.

## Patentansprüche

1. Transporteinheit in einem Leergutrücknahmesystem für Leergut, insbesondere Flaschen und Dosen, in welcher das Leergut eine Erkennungseinheit passiert, die die charakteristischen Daten des Leergutes erfasst, wobei die Transporteinheit einen Fallschacht oder eine Fallrinne (2) aufweist, über den das Leergut aus einem höheren Förderniveau auf ein niedrigeres, durch einen Förderer (5) gebildetes Förderniveau überführbar ist, und wobei im Bereich einer Aufstellfläche (5a) des Leergutes auf dem Förderer (5) Stabilisatoren (7) vorgesehen sind, die in Abhängigkeit von den von der Erkennungseinheit erfassten Daten des Leergutes in eine erste Position steuerbar sind, in der das aus dem Fallschacht oder der Fallrinne (2) kommende Leergut in einen von den Stabilisatoren (7) gebildeten Aufnahmeraum zwängungsfrei einfallen kann, und die Stabilisatoren (7) in eine zweite Position steuerbar sind, in der der von den Stabilisatoren (7) begrenzte Aufnahmeraum zur Stabilisierung der Stehposition des Leergutes verengt wird, und die Stabilisatoren (7) in eine dritte Position steuerbar sind, in der sie das Leergut freigeben, so dass dieses durch den Förderer (5) aus dem Aufnahmeraum heraus transportiert werden kann, **dadurch gekennzeichnet, dass** zumindest zwei Aufstellbereiche (5a, 5b) vorgesehen sind und der Fallschacht bzw. die Fallrinne (2) mit einer Weiche (3) versehen ist, die wahlweise mit einem der Aufstellbereiche (5a, 5b) derart verbindbar ist, dass das Leergut wahlweise auf einen der beiden Aufstellbereiche (5a, 5b) transportierbar ist, wobei die Aufstellbereiche (5a, 5b) jeweils mit Stabilisatoren (7) versehen sind und die Stabilisatoren (7) in Abhängigkeit von den Daten des jeweils transportierten Leerguts ansteuerbar sind.

2. Transporteinheit nach Anspruch 1, **dadurch gekennzeichnet, dass** der Fallschacht bzw die Fallrinne (2) als eine sich in Richtung des Förderers (5) verbreiternde Rutsche ausgebildet ist.

3. Transporteinheit nach Anspruch 1 oder 2, **dadurch gekennzeichnet, dass** der Förderer (5) ein Transportband ist.

4. Transporteinheit nach Anspruch 1, 2 oder 3, **dadurch gekennzeichnet, dass** die Weiche (3) verschwenkbar an der Oberseite (8a) einer die Aufstellbereiche (5a, 5b) trennenden Wand (8) angelenkt ist.

5. Leergutrücknahmeeinrichtung mit einer Transporteinheit nach einem der Ansprüche 1 bis 4.

## Claims

1. Transporting unit in a system for collecting empty containers, in particular bottles and cans, in which the empty container passes a detection unit which senses the characteristic data of the empty container, wherein the transporting unit has a dropping shaft or a dropping channel (2) via which the empty container can be transferred from a higher conveying level to a lower conveying level, which is formed by a conveyor (5), and wherein stabilizers (7) are provided in the region of an erecting surface (5a) for the empty container on the conveyor (5), and these stabilizers can be moved in dependence on the empty containerspecific data sensed by the detection unit, into a first position, in which the empty container coming from the dropping shaft or the dropping channel (2) can drop, without constraint, into an accommodating space formed by the stabilizers (7), and the stabilizers (7) can be moved into a second position, in which the accommodating space bounded by the stabilizers (7) is narrowed in order to stabilize the standing position of the empty container, and the stabilizers (7) can be moved into a third position, in which they release the empty container, in which case the latter can be transported out of the accommodating space by the conveyor (5), **characterized in that** at least two erecting regions (5a, 5b) are provided and the dropping shaft or the dropping channel (2) is provided with a diverter (3) which can be connected optionally to one of the erecting regions (5a, 5b) such that the empty container can be transported optionally onto one of the two erecting regions (5a, 5b), wherein the erecting regions (5a, 5b) are each provided with stabilizers (7) and the stabilizers (7) can be activated in dependence on the data relating to the respectively transported empty container.

2. Transporting unit according to Claim 1, **characterized in that** the dropping shaft or the dropping channel (2) is designed as a chute which widens in the direction of the conveyor (5).

3. Transporting unit according to Claim 1 or 2, **characterized in that** the conveyor (5) is a transporting belt.

4. Transporting unit according to Claim 1, 2 or 3 **characterized in that** the diverter (3) is articulated in a pivotable manner on the topside (8a) of a wall (8) which separates the erecting regions (5a, 5b).

5. Arrangement for collecting empty containers, having a transporting unit according to one of Claims 1 to 4.

## Revendications

1. Unité de transport dans un système de récupération de produits vidés, notamment de bouteilles et de boîtes, dans lequel le produit vidé passe dans une unité de reconnaissance qui relève les données caractéristiques du produit vidé, l'unité de transport ayant un puits ou une goulotte (2) de descente, par lequel le produit vidé peut être transféré d'un niveau de convoyage plus élevé à un niveau de convoyage plus bas formé par un convoyeur (5) et dans lequel il est prévu, dans la zone d'une surface (5a) de pose du produit vidé sur le convoyeur (5), des stabilisateurs (7) qui, en fonction des données du produit vidé relevées par l'unité de reconnaissance, peuvent être mis dans une première position, dans laquelle le produit vidé venant du puits ou de la goulotte (2) de descente peut tomber sans contrainte dans un espace de réception formé par les stabilisateurs (7), et les stabilisateurs (7) peuvent être mis dans une deuxième position dans laquelle l'espace de réception délimité par les stabilisateurs (7) est rétréci pour stabiliser la position de pose du produit vidé, et les stabilisateurs (7) peuvent être mis dans une troisième position dans laquelle ils dégagent le produit vidé de sorte que celui-ci peut être transporté par le convoyeur (5) hors de l'espace de réception, **caractérisée en ce qu'**il est prévu au moins deux zones (5a, 5b) de pose et le puits ou la goulotte (2) de descente est muni d'un aiguillage (3) qui peut être relié au choix avec l'une des zones (5a, 5b) de pose, de façon à pouvoir transporter le produit vidé au choix sur l'une des deux zones (5a, 5b) de pose, les zones (5a, 5b) de pose étant munies respectivement de stabilisateurs (7) et les stabilisateurs (7) pouvant être commandés en fonction des données du produit vidé respectivement transporté.

2. Unité de transport suivant la revendication 1, **caractérisée en ce que** le puis ou la goulotte (2) de descente est constitué sous la forme d'un toboggan s'élargissant dans la direction du convoyeur (5).

3. Unité de transport suivant la revendication 1 ou 2, **caractérisée en ce que** le convoyeur (5) est une bande convoyeuse.

4. Unité de transport suivant la revendication 1, 2 ou 3, **caractérisée en ce que** l'aiguillage (3) peut basculer sur la face (8a) supérieure d'une paroi (8) séparant les zones (5a, 5b) de pose.

5. Dispositif de récupération de produits vidés ayant une unité de transport suivant l'une des revendications 1 à 4.
